# EUROPEAN PATENT APPLICATION

(11) **EP 4 573 869 A1**
(43) Date of publication of application: **25.06.2025**
(21) Application number: 23218094.3
(22) Date of filing: 19.12.2023
(51) Int. Cl.: A01C 21/00

(54) **METHOD AND SYSTEM FOR DETERMINING A CROP STATUS AND DETERMINING AN AGRICULTURAL PRODUCT RECOMMENDATION FOR A CROP**

(71) Applicant: Yara International ASA, 0277 Oslo (NO)
(72) Inventor: PORTZ, Gustavo, 48249 Dülmen (DE)
(74) Representative: AWA Sweden AB

(57) **Abstract**

Method and system for determining a crop status and determining an agricultural product recommendation for a crop, wherein a correction for the crop planting density is achieved. A further embodiment for the recommendation and application of fertilizer is envisaged.

## Description

### Technical field

The present disclosure relates to a method and system for determining an agricultural product recommendation for a crop.

### Background

Determining the right amount of an agricultural product, e.g. fertilizer, is a difficult decision for a farmer. A deficit in the provision of nutrients for the crop will reduce yield, while the abuse of fertilizer produces economic losses and damages the environment, since unused nutrients can be lost by volatilization, run off, percolate the soil, and pollute the subsoil and nearby water sources. Due to the more stringent regulations regarding the use of fertilizer in Europe, it is crucial to improve the nutrient use efficiency, and specifically the nitrogen due to leaching problems, while increasing yield in the agricultural fields to meet the food requirements of an increasing population. Same reasoning goes for other agricultural products, wherein a specific regulation or dosage is mandatory.

The development and introduction of digitalization in agricultural machinery has allowed farmers to develop new techniques for improving efficiency and productivity with their crops. Thanks to the digitalization of harvest data and the use of remote sensing approaches, farmers are able to produce yield maps which accurately depict the position-dependent productivity of their fields. Together with new planting machinery which allows adapting the planting density of the crops, farmers can plant more intensively in field areas where the crop growing conditions are better and herewith further increase the productivity of the fields. However, these new planting approaches need tailored and adjusted fertilizer recommendations which take into account the introduced planting density and the caused variability into the agricultural field.

Amongst the different methods for estimating crop status in crops, the use of imagery has gained importance. Especially due to the availability of public imagery from long standing satellite platforms (SENTINEL and LANDSAT amongst others). Remote sensing allows determination of crop levels of remote fields without the need of in-field inspection. However, imagery in general is not able to take into account the varying planting densities and may produce inaccurate agricultural product recommendations.

It is a goal of the present disclosure to determine an agricultural product recommendation for a crop solving the above-mentioned problems.

### Summary

According to a first aspect of the present disclosure, this and other objectives are achieved by a computer implemented method for determining an agricultural product recommendation for a crop, wherein the method comprises determining an agricultural field comprising a crop; determining a planting density for the crop; generating a plurality of field areas within the agricultural field based on the planting density; determining a status of the crop and generating an agricultural product recommendation based on the crop status; and adjusting the agricultural product recommendation for the field areas based on the planting density.

Following this approach, the agricultural product recommendation can be adapted to the planting density and locally denser populated areas can receive the appropriate nutrient amount.

According to a second aspect of the present disclosure, adjusting the agricultural product recommendation comprises increasing the agricultural product recommendation for the field areas where the planting density is greater than a predetermined value.

Following this approach, the areas with higher planting density are correctly dealt with.

According to a third aspect of the present disclosure, determining a crop status comprises determining a crop nutrient status, and wherein generating an agricultural product recommendation based on the crop nutrient status comprises determining a fertilizer recommendation to level the crop status over the field.

Following this approach, the areas with greater nutrient deficit are balanced with the proper recommendation.

According to a fourth aspect of the present disclosure, generating field areas based on the planting density comprises determining at least one area wherein the planting density is comprised between a first predetermined value and a second predetermined value.

Following this approach, different areas of the field can be correspondingly managed.

According to a fifth aspect of the present disclosure, determining a crop status comprises receiving image data of the crop and determining at least one of a nutrient status, a biomass status, or a nutrient uptake of the crop from the image data.

According to a further aspect of the present disclosure, generating a fertilizer recommendation comprises generating a uniform recommendation, a variable recommendation, and/or a combination thereof.

Following this approach, different specific needs of the crop can be addressed.

According to a further aspect of the present disclosure, determining a planting density for the crop comprises receiving a planting prescription map of the agricultural field.

Following this approach, a reliable source for determining a planting density is obtained.

According to a further aspect of the present disclosure, the adjusted agricultural product recommendation is calibrated so that the total adjusted agricultural product amount corresponds to the agricultural product recommendation total amount.

Following this approach, the adjusted agricultural product fulfils further boundary constraints.

According to a further aspect of the present disclosure, calibrating the adjusted agricultural product recommendation comprises scaling the target rate of the adjusted agricultural product recommendation, wherein the target rate is the amount of agricultural product to be applied per area, by the target rate of the agricultural product recommendation divided by the average target rate of the agricultural product recommendation for the agricultural field.

Following this approach, the adjusted agricultural product recommendation is scaled respecting the crop status, the planting density and the boundary constraints.

According to a further aspect of the present disclosure, the method further comprises producing a machine-readable script file based on the adjusted agricultural product recommendation for an agricultural apparatus to carry out a corresponding agricultural product application.

Following this approach, the agricultural product recommendation can be automatically uploaded to an agricultural apparatus.

According to a further aspect of the present disclosure, the method further comprises implementing the adjusted agricultural product recommendation by means of an agricultural apparatus configured to carry out an agricultural product application.

According to further aspects, a system, a data processing apparatus, a computer-readable storage medium, and a computer program product configured to carry out the above discussed methods are envisaged within the present disclosure.

### Brief description of the drawings

The accompanying drawings, which are included to provide a further understanding of the present disclosure and are incorporated in and constitute a part of this specification, illustrate embodiments of the disclosure and together with the description serve to explain the principles of the disclosure.
Figure 1 shows an agricultural field according to the field of application of the present disclosure and a schematic representation of a system according to the main embodiment of the present disclosure.
Figure 2 shows an agricultural field with the different field areas generated based on a planting density according to an embodiment of the present disclosure.
Figure 3 shows an agricultural field with an example of a vegetation index represented as an overlay on the field according to an embodiment of the present disclosure.
Figure 4 shows a representation of different crops with different biomass and planting density to exemplify one of the issues addressed by the present disclosure.
Figure 5 shows a workflow according to an embodiment of the current disclosure.
Figure 6A shows an agricultural field with a distribution of crop nutrient status over the field according to an embodiment of the present disclosure.
Figure 6B shows the field of Figure 6A with the different field areas generated based on a planting density according to an embodiment of the present disclosure.
Figure 6C shows the generated fertilizer recommendation based on the crop nutrient status of Figure 6B according to an embodiment of the present disclosure.
Figure 6D shows the corrected fertilizer recommendation according to an embodiment of the present disclosure.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings. Reference will now be made in detail to several embodiments, examples of which are illustrated in the accompanying figures.

### Detailed Description

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

The enumeration of numeric values by means of ranges of figures comprises all values and fractions in these ranges, as well as the cited end points. The term "approximately" as used when referring to a measurable value, such as a parameter, an amount, a time period, and the like, is intended to include variations of +/- 10% or less, preferably +/-5% or less, more preferably +/-1% or less, and still more preferably +/-0.1% or less, of and from the specified value, in so far as the variations apply to the disclosure disclosed herein. It should be understood that the value to which the term "approximately" refers per se has also been disclosed.

Unless defined otherwise, all terms present in the current disclosure, including technical and scientific terms, have the meaning which a person skilled in the art usually gives them. For further guidance, definitions are included to further explain terms which are used in the description of the disclosure.

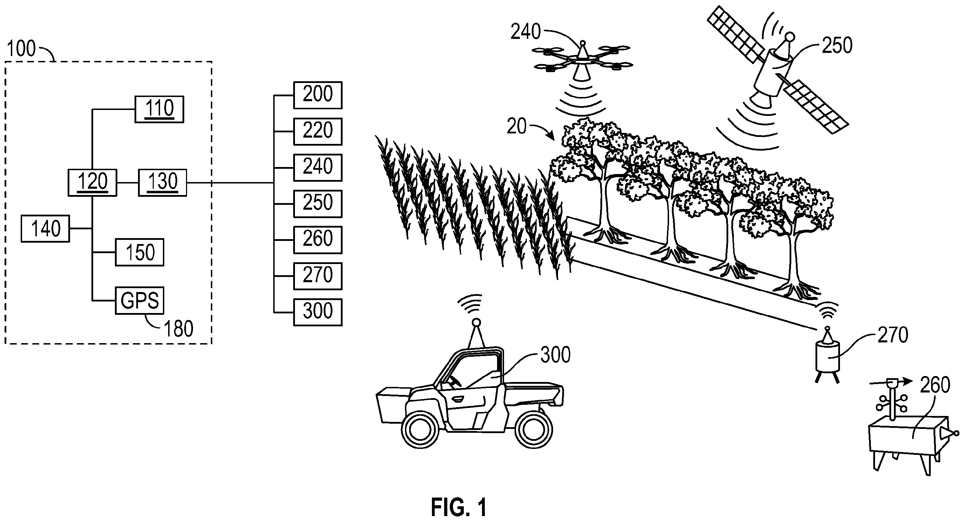

Figure 1 depicts an agricultural field comprising a crop within an agricultural field 20 with other systems and apparatus with which the system 100 may interoperate. System 100 of the current disclosure is configured to determine fertilizer recommendations to be carried out in farms and agricultural fields. Agricultural field 20 may comprise crops and forestry areas and may further comprise a network of dedicated agricultural sensors 270 comprising: soil sensors, moisture sensors and other state of the art sensors; and weather stations 260 comprising rain, wind, temperature, solar irradiance, humidity sensors and the like. Figure 1 further depicts the usual remote sensing devices which are referred to in the current disclosure. Remote sensing devices like satellite imaging system 250 and other aerial vehicles 240 like aircrafts or unmanned aerial vehicles (UAV), as well as terrestrial field vehicles are considered to be within the scope of the current disclosure.

Figure 1 further shows a schematic representation system of the current application according to one embodiment of the current disclosure. System 100, according to the present disclosure, comprises several components such as a memory unit 110, a processor 120, a wired/wireless communication unit 130, an input/output unit 140. The system 100 may as well be operatively connected with a further personal or mobile device by means of the communication unit 130.

System 100 comprises an agricultural recommendation engine 220 to which the system may be remotely connected by means of the communication unit 130, may it be of a remote nature. In this case, the remote agricultural recommendation engine 220 may be represented by a computer, a remotely accessible server, other client-server architectures or any other electronic devices usually encompassed under the term data processing apparatus. System 100 does not need to be located within the vicinities of the agricultural field where the recommendation is supposed to take place.

System 100 can be represented as well by a laptop computer or handheld device directly operated by the farmers or users at the location of the agricultural field or not, with an integrated agricultural recommendation engine 150 which can be fully operated at the farm's location and may comprise a GPS unit 180 or any other suitable localization means. It is to be understood that the presence of remote and integrate recommendation engines are not mutually excluding. Integrated agricultural recommendation engine 150 can be a local copy of remote agricultural recommendation engine 220 or a light version of it to support periods of low network connectivity and offline work. Further, a mobile or personal device is considered to be any state-of-the-art mobile computing device which allows the input and output of data by the users and comprise the usual features.

System 100 and remote or integrated agricultural recommendation engines may comprise field and farm data and external data and/or be configured to receive said data, whereby external data comprises weather data, remote data comprising remote image data and further data provided by weather forecast providers or other third parties. Field data may comprise amongst others current and past data of at least one of the following: field and geographic identifiers regarding the geometry of the boundaries of the agricultural field, including the presence of areas within the agricultural field which are not managed, topographic data, crop identifiers (crop variety and type, growth status, planting data and date, plant nutrition and health status) of current and past crops, harvest data (yield, value, product quality, estimated or recorded historic values), soil data (macro and micro nutrients levels, texture, type, pH, soil organic matter (SOM) and/or cation exchange capacity, CEC). Farm data may comprise further data regarding planned and past tasks like field maintenance practices and agricultural practices, fertilizer application data, pesticide application data, irrigation data and other field reports as well as historic series of the data, allowing the comparison of the data with past data, and the processing of further administrative data like work shifts, logs and other organizational data. Planned and past tasks may comprise further activities like surveillance of plants and pests, application of pesticides, fungicides or crop nutrition products, measurements of at least one farm or field parameter, maintenance and repair of ground hardware and other similar activities.

System 100 may be further configured to receive any of the above-mentioned data inputted manually by the users/farmers by means of an input/output unit 140 or the mobile/handheld device or received by the communication unit 130 from the dedicated sensors or data-processing equipment. Further, system 100 and agricultural recommendation engine may be configured to receive weather data from nearby weather stations 260 and/or external crop/farm sensors 270, configured to communicate via one or more networks.

System 100 may further be operatively connected to an agricultural apparatus 200. Examples of agricultural apparatus 200 include tractors, combines, harvesters, planters, trucks, spreaders and sprayers, and any other item of physical machinery or hardware, typically mobile machinery, and which may be used in tasks associated with agriculture and agricultural product application. In one embodiment, system 100 may be configured to communicate with the agricultural apparatus 200 by means of wireless networks in order to carry out the agricultural product application for the determined crop. System 100 may be further configured to produce a machine-readable script file for the agricultural apparatus to carry out the agricultural product application.

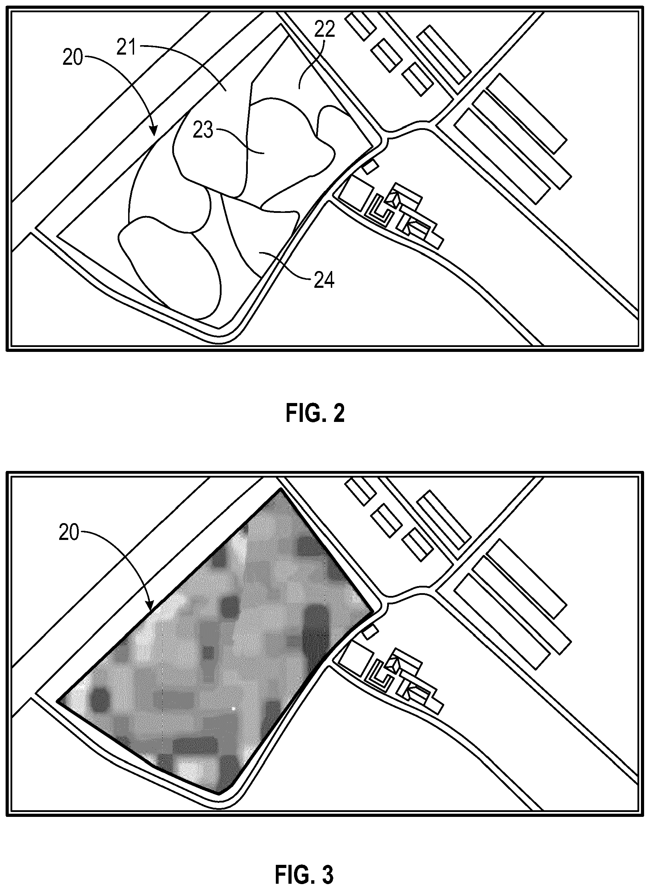

Figure 2 shows an example of an agricultural field 20, wherein a plurality 21, 22, 23, 24 of field areas are displayed. These areas represent areas with a different planting density within the agricultural field. Planting rates may differ for different crops, but for example, for planting maize, planting densities comprised between 20.000 and 140.000 plants/ha can be found on farms. Hence, field area 21 may for example have a planting density comprised between 60-65 thousand plants per hectare, field area 22 may have a planting density comprised between 65-70 thousand plants per hectare, field area 23 may have a planting density comprised between 70-75 thousand plants per hectare. These examples shall not be considered limiting for the number of field areas within an agricultural field nor for the ranges chosen as examples.

Figure 3 shows an example of remote image data as usually represented. While usually on different scales of colours the current image shows it on a greyscale. Usual remote image data for agricultural purposes may comprise data relating to different spectral bands with different spectral and spatial resolutions. Usual processing of remote image data for obtaining crop related information may comprise generating at least one coefficient (or vegetation index) indicative of a crop status. Different coefficients or indexes have been used in the literature for obtaining different agricultural, soil and vegetation information like the difference vegetation index and the normalized difference vegetation index (NDVI). However, the teaching of the current disclosure is not limited to a single vegetation index and other coefficients may be used within the teachings of the present disclosure, e.g. the Atmospherically Resistant Vegetation Index (ARVI), the Soil-Adjusted Vegetation Index (SAVI) or the Type Soil Atmospheric Impedance Vegetation Index (TSARVI) or any other suitable index. Once the at least one coefficient indicative of the crop status within the agricultural field has been generated, a crop status can be determined based thereon. Hence, the determination of different factors like chlorophyll, nitrogen uptake and biomass amongst others may be accounted for generating a fertilizer recommendation for the agricultural field which takes into consideration the spatial variability.

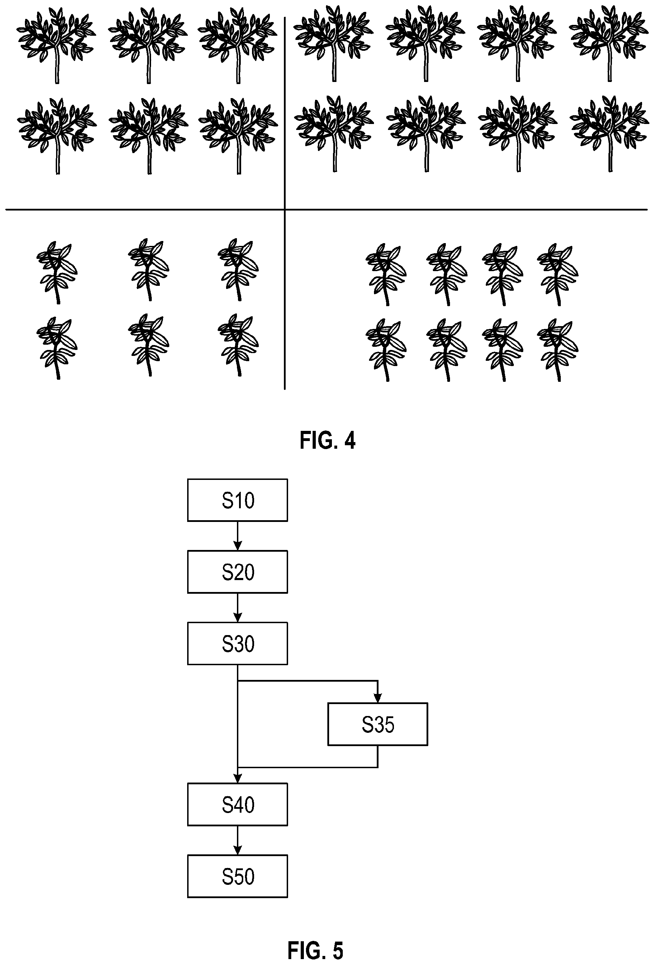

However, as it is depicted in Figure 4, image data for use in agricultural purposes is usually not suitable for distinguishing between biomass and planting density, therefore influencing the level/concentration of nutrients as well, when considering images from a certain distance or images taken later in the season even at closer ranges when the crop canopy closes. Hence, a remote image, taken at a certain distance from the floor, is not able of differentiating between the upper left quadrant and the bottom right quadrant situation, wherein the upper left quadrant depicts plants with a higher biomass but lower planting density compared to the bottom right quadrant, depicting a lower biomass but higher planting density. Images taken at closer range, cannot determine the planting density either since only a leave or part of it might be present in it. As such, the method of the current disclosure intends to compensate such an effect and as it will be explained below aim for correcting the disparity present in remote image data.

The current application aims at single seeding crops which can be variably planted on agricultural fields. For example, maize or corn, cotton and oilseed rape are of special relevance for this approach since the specific growing features make them relevant for adapting the fertilization based on the planting densities. However, other cereals are as well included within the scope of the present disclosure.

The method of the current disclosure comprises determining S10 an agricultural field comprising a crop. A non-limiting example of how the current method may determine at least one agricultural field may be the user providing a predetermined field, but the method of the current disclosure may be configured to automatically retrieve the field for which the recommendation is intended based on farm and/or field data. The agricultural field may be determined as well based on a position of the user, which may be given by the mobile device, by the gps unit 180 of the system 100, or the agricultural apparatus 200, depending where the user may be implementing the method of the current disclosure. In a further embodiment, system 100 is configured to determine the boundaries of the determined agricultural field may the determined field not have data regarding the boundary locations in the existing farm data.

Within the present disclosure, an agricultural product recommendation is referred to agrochemical products and mineral or natural products, intended for improving plant health and/or status. While a specific approach for the crop nutrient status is intended, and for the sake of brevity the description refers to fertilizers, under the scope of the present disclosure the approach is as well valid for pesticides, fungicides, biostimulants and other products which are dependent on a crop status wherein the same problems arising from imagery sensing may be addressed, since the biomass amount of a crop is defining for the amount of agricultural product needed on the field and cannot be always distinguished from the planting density.

The method further comprises determining S20 a planting density for the crop. Planting data may be already present in the agricultural recommendation engine 220 or may be accessed from planting data as delivered by planters. Alternatively, the planting density may as well be input by means of the input unit 140 of the system 100.

The method further comprises determining S30 a plurality of field areas within the agricultural field based on the planting density of the crop.

According to a further embodiment, generating S35 field areas based on the planting density comprises determining at least one area wherein the planting density is comprised between a first predetermined value and a second predetermined value. As explained above, planting density may vary greatly depending on the crop type and the ranges defining each field area, with the first and second respective predetermined value, may be chosen relative to the planting specifics of each field. For example, in a maize agricultural field, where the planting densities varies between 60 and 90 thousand plants per hectares, a plurality of field areas can be generated, wherein a first field area may comprise those parts of the field where the planting densities are between 60 and 70 thousand plants per hectare, a second field area may comprise those parts of the field where the planting densities are between 70 and 80 thousand plants per hectare and a third field area may comprise those parts of the field where the planting densities are between 80 and 90 thousand plants per hectare.

The method further comprises determining S40 a crop status and generating an agricultural product recommendation based on the crop status. According to a further embodiment, determining a crop status comprises receiving remote image data of the crop and determining at least one of a nutrient status, a biomass status or a nitrogen uptake of the crop from the image data as explained above. According to a further embodiment, a crop nutrient status may be determined by means of a local or in-field crop nutrient measurement device, like the N-Tester^{®} or the N-Sensor^{®}, or any other similar device. A combination of in-field crop measurement and remote sensing is as well considered to be within the scope of the current disclosure. Based on the determined crop nutrient status, a fertilizer recommendation may be generated for the crop.

When generating an agricultural product recommendation for a crop in an agricultural field, different constraints are usually taken into consideration. For example, the farmers may only have a total amount of product due to economic constraints, or they may only be allowed a total amount of fertilizer for the whole field or for subparts thereof due to environmental regulations. The product recommendation is therefore generated such that a distribution of the total amount of product available is made over the fields. This distribution can be made as a uniform application in case of a single in-field local measurement being available to determine the crop status, wherein the agricultural product is evenly distributed over the field, or variably, generating a variable rate application of the product (pixelwise if the crop status is derived from remote sensing), taking into consideration the in-field variabilities present in remote imagery, for example, or as a combination thereof. The farmers may set specific constant target rates, i.e. amount of product, per specific zones which then may be distributed according to planting density, hereby achieving a better distribution, and remote imagery, if used.

Further, the agricultural product recommendation is adjusted S50 based on the planting density for the specifically determined field areas.

According to the present disclosure, planting density or seeding density is defined as the amount of seeds/plants which were sown on the field, hereby achieving an amount of specific plants per area unit. While the examples and ranges are given for specific crops, this represents no limitation with respect to the scope of the current disclosure.

The advantages of the current method will be made clear below and further specific embodiments will represent specific solutions to deal with the in-field variabilities while addressing the anthropic disparities introduced into the remote image data by means of the varying plant density.

According to a further embodiment, adjusting the agricultural product recommendation comprises increasing the fertilizer recommendation for the field areas where the planting density is greater than a predetermined value.

According to a further embodiment, increasing the agricultural product recommendation for the field areas where the planting density is greater than a predetermined value comprises increasing the fertilizer recommendation for each increase of planting density of a specific amount over the predetermined value of planting density. For example, for the specific fertilizer case, when having a target rate of X kilograms of Nitrogen per hectare, this value may be increased by a certain amount Y of kilograms of Nitrogen per hectare for every increase of 5.000 plants per hectare when above 60.000 plants per hectare. Hence an area populated with a planting density between 70 and 75 thousand plants per hectare, the total amount of nitrogen would be X + 2*Y for the defined area. While the example has been discussed with a discrete and concrete approach, the increase in fertilizer recommendation may follow a linear, polynomial or quasilinear function approach, or any similar evolution or combination thereof, increasing gradually or stepwise with the increasing amount of planting density.

According to a further embodiment, generating a fertilizer recommendation based on the crop nutrient status comprises determining a fertilizer recommendation to level the crop status over the field. Levelling the crop status over the field is understood as providing more fertilizer where the status of the crop is under the average of the crop status over the field, e.g. areas where biomass has not been developed accordingly or the nutrient uptake is lower.

Following this approach, an appropriate combination of levelling of the crop status addressing the in-field variabilities while increasing the fertilizer amount in areas where a higher planting density exists, taking therefore into consideration the increase in planting density and the corresponding nutrient needs is achieved, which improves the nutrient use efficiency and boosts yields.

According to a further embodiment, the adjusted agricultural product recommendation is calibrated so that the total adjusted agricultural product amount corresponds to the intended agricultural product recommendation total amount.

Following this embodiment, the farmers can ensure that the total amount of agricultural product used for their fields meet their environmental or economic constraints. Due to the adjustment to tackle the planting density, agricultural product amounts may vary from the first generated fertilizer recommendation and therefore the adjusted agricultural product recommendation may not comply with the applying regulations or the economic budget of the farmers. Hence, calibrating the adjusted agricultural product recommendation maintains the agricultural product distribution over the field, while adjusting the agricultural product total amount to fulfil these further criteria.

According to a further embodiment, calibrating the adjusted agricultural product recommendation comprises scaling the target rate of the adjusted agricultural product recommendation, wherein the target rate is the amount of agricultural product to be applied per area, by the target rate of the agricultural product recommendation divided by the average target rate of the agricultural product recommendation for the agricultural field.

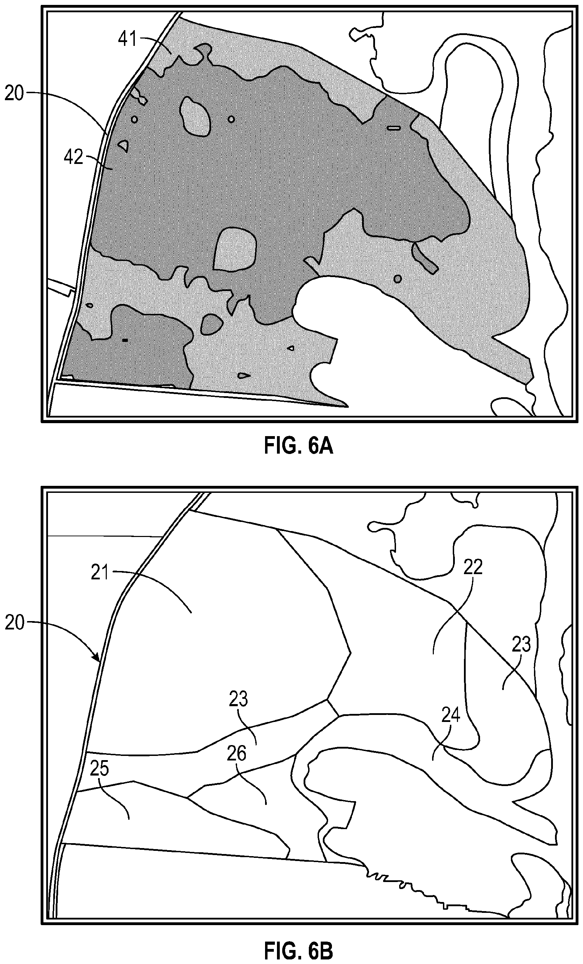

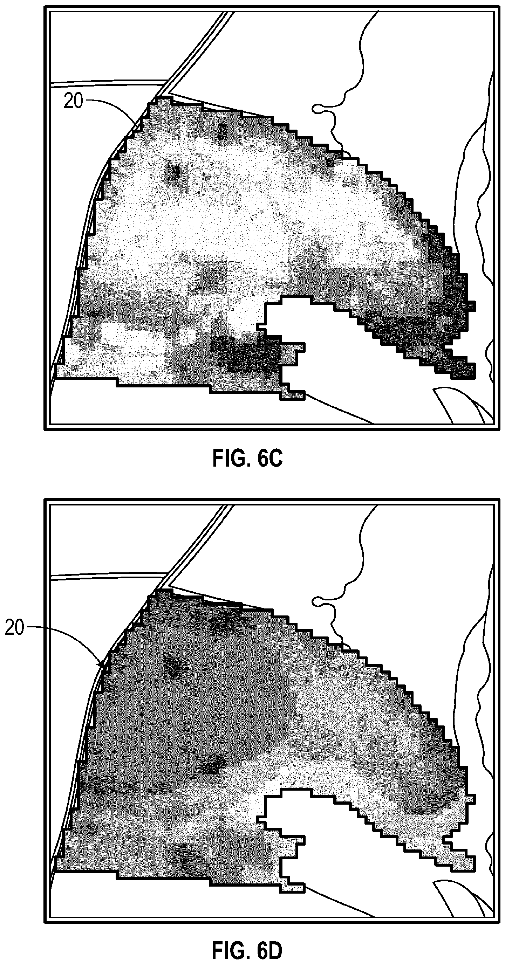

Figures 6A-6D show the application of an embodiment of the current disclosure and the results obtained for the generation of a fertilizer recommendation. Figure 6A shows the distribution of a vegetation index over an agricultural field 20 related to a crop nutrient status over the field, wherein areas marked as 41 have a lower status value (e.g. biomass or nutrient uptake) and areas 42 a have a higher value. Figure 6C shows in that respect what a fertilizer recommendation without considering the planting density, wherein the lighter areas represent a smaller fertilizer recommendation and the darker areas a higher one. As defined according to one embodiment, the areas with lower biomass/nutrient uptake are seen to concentrate the higher fertilizer recommendation and there is no offset or compensation for planting density. Figure 6B shows the same agricultural field 20, wherein a plurality of field areas (21, 22, ..., 26) with a planting density comprised between a first and a second predetermined value. In this case, field area 21 presents the highest planting density, followed by areas 25 and 22 in decreasing order, whereas field area 24 presents the lowest density, and field areas 26 and 23, respectively in increasing order. The influence of these planting density distribution over the field on the adjusted fertilizer recommendation can be seen on Figure 6D. In Figure 6D, it can be seen how field area 21 and 25, having the greater planting density now concentrate the darker colours, representing a higher fertilization recommendation, wherein said fertilizer amounts have been redistributed from field areas 24 and 26. Still, thanks to the combined approach some of the variabilities as present in area 21 with respect to the crop status variabilities, these are preserved within the area (as well as in other areas) hereby addressing as well natural crop status variabilities within the specific field areas.

According to a further embodiment, the method further comprises producing a machine-readable script file based on the adjusted fertilizer recommendation for an agricultural apparatus to carry out a corresponding fertilizer application. Following this embodiment, the system of the current disclosure, or alternatively the agricultural recommendation engine or the processing unit may be configured to produce a machine-readable script which can be uploaded, by means of wireless or other data transmission means to an agricultural apparatus configured to carry out the fertilizer application.

According to a further embodiment, the method further comprises implementing the adjusted agricultural product recommendation by means of an agricultural apparatus configured to carry out an agricultural product application.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

## Claims

1. Computer implemented method for determining an agricultural product recommendation for a crop, wherein the method comprises:
• determining an agricultural field comprising a crop;
• determining a planting density for the crop;
• generating a plurality of field areas within the agricultural field based on the planting density;
• determining a status of the crop and generating an agricultural product recommendation based on the crop status; and
• adjusting the agricultural product recommendation for the field areas based on the planting density.

2. Method according to claim 1, wherein adjusting the agricultural product recommendation comprises increasing the agricultural product recommendation for the field areas where the planting density is greater than a predetermined value.

3. Method according to claim 1 or 2, wherein determining a crop status comprises determining a crop nutrient status, and wherein generating an agricultural product recommendation based on the crop nutrient status comprises determining a fertilizer recommendation to level the crop status over the field.

4. Method according to any one of claims 1 to 3, wherein generating field areas based on the planting density comprises determining at least one area wherein the planting density is comprised between a first predetermined value and a second predetermined value.

5. Method according to claim 1, wherein determining a crop status comprises receiving image data of the crop and determining at least one of a nutrient status, a biomass status, or a nutrient uptake of the crop from the image data.

6. Method according to claim 3, wherein generating a fertilizer recommendation comprises generating a uniform recommendation, a variable recommendation, and/or a combination thereof.

7. Method according to any one of claims 1 to 6, wherein determining a planting density for the crop comprises receiving a planting prescription map of the agricultural field.

8. Method according to any one of claims 1 to 7, wherein the adjusted agricultural product recommendation is calibrated so that the total adjusted agricultural product amount corresponds to the agricultural product recommendation total amount.

9. Method according to claim 8, wherein calibrating the adjusted agricultural product recommendation comprises scaling the target rate of the adjusted agricultural product recommendation, wherein the target rate is the amount of agricultural product to be applied per area, by the target rate of the agricultural product recommendation divided by the average target rate of the an agricultural product recommendation for the agricultural field.

10. A method according to any of the preceding claims, wherein the method further comprises producing a machine-readable script file based on the adjusted agricultural product recommendation for an agricultural apparatus to carry out a corresponding agricultural product application.

11. A method according to any of the preceding claims, wherein the method further comprises implementing the adjusted agricultural product recommendation by means of an agricultural apparatus configured to carry out an agricultural product application.

12. A system for providing an agricultural product recommendation comprising a device configured to carry out the method according to any one of the claims 1 to 11.

13. A data processing apparatus comprising means for carrying out the method of any one of the claims 1 to 11.

14. A computer-readable storage medium comprising instructions which, when executed by a computer system, cause the computer system to carry out the method of any one of the claims 1 to 11.

15. A computer program product comprising instructions which, when the program is executed by a computer, cause the computer to carry out the method of any one of the claims 1 to 11.
